# FASCICULE DE BREVET EUROPEEN

(11) **EP 3 449 783 B1**
(45) Date de publication et mention de la délivrance du brevet: **31.08.2022**
(21) Numéro de dépôt: 18187150.0
(22) Date de dépôt: 02.08.2018
(51) Int. Cl.: A47J 36/02, A47J 27/00

(54) **RÉCIPIENT DE CUISSON COMPORTANT UN FOND MUNI D'ÉLÉMENTS FERROMAGNÉTIQUES INDÉPENDANTS**
KOCHBEHÄLTER, DER EINEN BODEN MIT UNABHÄNGIGEN EISENMAGNETISCHEN ELEMENTEN UMFASST
COOKING VESSEL HAVING A BOTTOM PROVIDED WITH INDEPENDENT FERROMAGNETIC ELEMENTS

(30) Priorité: 30.08.2017 FR 1758015
(43) Date de publication de la demande: 06.03.2019
(73) Titulaire: SEB S.A., 69130 Ecully (FR)
(72) Inventeur: LINGLIN, Benoît, 74370 SAINT MARTIN BELLEVUE (FR)
(74) Mandataire: SEB Développement

(56) Documents cités:
- FR-A1- 2 689 748
- FR-A1- 2 882 240
- US-A- 5 694 674
- US-A1- 2008 035 139

## Description

La présente invention concerne un récipient de cuisson destiné à être disposé sur un moyen de chauffage par induction pour la cuisson d'aliments notamment une poêle, une casserole, une sauteuse, un faitout ou un autocuiseur.

On connaît du document FR2919484 un récipient de cuisson réalisé à partir d'une feuille de métal ou d'alliage léger emboutie, comportant un fond comprenant une plaque ferromagnétique réalisée en un métal ou alliage ayant des propriétés mécaniques, thermiques, physiques différentes et notamment une limite élastique plus élevée que celle du métal ou alliage de la feuille. La plaque est encastrée dans le fond par une opération de frappe. La plaque ferromagnétique assure la compatibilité du récipient de cuisson avec un appareil de chauffage par induction. La plaque ferromagnétique présente des fentes pour diviser la plaque ferromagnétique en des éléments qui restent attachés entre eux. La division de la plaque ferromagnétique en plusieurs éléments permet de limiter la déformation du fond lors de la chauffe liée à l'effet bimétallique de la construction du fond.

Cependant, la plaque comporte des zones d'attache entre les différents éléments et la surface de certains éléments reste importante. Ainsi, il subsistera une déformation lors de la chauffe.

De plus, la surface de la plaque ferromagnétique destinée à être en regard de l'appareil de chauffage par induction diminue, via les fentes et autres ouvertures qui y sont pratiquées. Ainsi, la puissance de chauffe transmise au récipient de cuisson lors de son utilisation est moindre et sa capacité à être chauffé par induction est moins bonne.

On connait également du document FR2882240 un récipient de cuisson comportant un fond muni d'un revêtement qui comporte une couche comprenant des composés ferromagnétiques et qui est compatible avec un mode de chauffage par induction.

Le but de la présente invention est de remédier aux inconvénients précités et de proposer un récipient de cuisson destiné à coopérer avec un appareil de chauffage par induction qui présente un fonctionnement optimisé.

Un autre but de l'invention est de proposer un récipient de cuisson qui soit de conception simple et économique à mettre en œuvre.

Ces buts sont atteints avec un récipient de cuisson comportant une calotte comprenant un fond destiné à coopérer avec un moyen de chauffage par induction, ledit fond présentant une épaisseur E et comportant des éléments ferromagnétiques, caractérisé en ce que les éléments ferromagnétiques sont indépendants les uns des autres et s'inscrivent chacun dans une sphère de diamètre inférieur ou égal à l'épaisseur E.

Par indépendants les uns des autres, on comprend que les éléments ferromagnétiques sont distincts et sont maintenus sur le récipient de cuisson, par exemple, par la matière du fond.

Les éléments ferromagnétiques qui s'inscrivent chacun dans une sphère de diamètre inférieur à l'épaisseur E, peuvent être encastrés totalement dans le fond, à minima par plus d'un demi diamètre.

Chaque élément ferromagnétique est maintenu dans le fond par la majeure partie de sa surface externe pour obtenir une liaison mécanique optimisée.

Ainsi, la compatibilité du récipient de cuisson avec un appareil de chauffage par induction est assurée par un ensemble d'éléments ferromagnétiques de petite taille par rapport à la taille du fond. En conséquence, lors de la chauffe, le fond peut se dilater sans être contrarié par les éléments ferromagnétiques et le fond reste plan pour garantir un bon couplage avec l'appareil de chauffage par induction.

De manière avantageuse, seuls les éléments ferromagnétiques sont destinés à coopérer avec l'appareil de chauffage par induction pour faire chauffer le fond.

De préférence, les éléments ferromagnétiques comportent au moins une face plane.

Dans le cas où les éléments ferromagnétiques sont rapportés sur une face externe du fond, la face plane est agencée de manière parallèle à la face externe du fond pour garantir un bon couplage avec l'appareil de chauffage par induction.

Avantageusement, les éléments ferromagnétiques comportent au moins deux faces planes parallèles.

Ainsi, les éléments ferromagnétiques peuvent être fabriqués à partir d'un feuillard.

De préférence, les éléments ferromagnétiques sont des disques.

Une telle forme permet un bon compromis entre une dilatation du fond minimisée et une bonne surface de couplage lorsque les disques sont agencés à plat, côte à côte sur le fond.

Avantageusement, les disques présentent un diamètre compris entre l'épaisseur E et les trois quarts de l'épaisseur E.

La demanderesse a mis en évidence que dans cette plage de diamètre, on a de bons résultats en termes de déformation et de compatibilité induction par rapport aux appareils de chauffage par induction du commerce.

De préférence, les disques présentent une épaisseur comprise entre 0,4 et 0,8 millimètre, de préférence 0,6 millimètre.

De telles épaisseur permettent un bon couplage avec l'appareil de chauffage par induction, tout en optimisant la quantité de matière ferromagnétique mise en oeuvre.

Avantageusement, les éléments ferromagnétiques sont des billes.

Une telle disposition permet au fond de rester plan lors de la chauffe. De plus, une bille présente une surface externe importante qui permet lors de la chauffe de bien transférer l'énergie calorifique transmise par l'appareil de chauffe à induction vers le fond.

De manière avantageuse, les billes présentent un diamètre inférieur à la moitié de l'épaisseur E.

Cette disposition permet, notamment lorsque les billes sont rapportées sur le fond par frappe à froid, d'encastrer les billes complétement dans le fond avec un fluage de la matière de fond et des efforts compatibles avec des moyens industriels.

De préférence, les éléments ferromagnétiques sont rapportés sur une face externe du fond.

Ainsi, les éléments ferromagnétiques sont au plus près de l'appareil de chauffe à induction lorsque le récipient repose sur ce dernier, pour permettre un bon couplage.

Avantageusement, le fond est réalisé en un matériau métallique malléable du type aluminium et les éléments ferromagnétiques sont rapportés sur la face externe du fond par frappe à froid.

Un tel processus est particulièrement économique pour réaliser l'assemblage des éléments ferromagnétiques sur la face externe du fond.

De plus, un tel processus permet à la matière du fond d'entourer les éléments ferromagnétiques pour obtenir une liaison mécanique optimisée.

Un tel processus est particulièrement bien adapté si les éléments ferromagnétiques sont des billes qui ne nécessitent pas d'orientation avant la frappe.

De préférence, les éléments ferromagnétiques sont encastrés partiellement dans le fond.

Avantageusement, le fond comporte une collerette périphérique délimitant une zone d'implantation des éléments ferromagnétiques.

Une telle collerette peut maintenir les éléments ferromagnétiques lors de l'opération de frappe.

De préférence, la répartition des éléments ferromagnétiques n'est pas homogène sur le fond.

Ainsi, le fond peut présenter des zones avec des caractéristiques de chauffe particulières lorsque le récipient de cuisson coopère avec l'appareil de chauffage à induction, notamment des zones présentant des températures différentes ou une rapidité de chauffe différente.

De manière avantageuse, le récipient de cuisson comporte une paroi latérale, le fond et la paroi latérale comportant des éléments ferromagnétiques.

Une telle disposition permet d'optimiser la surface de couplage avec l'appareil de chauffe à induction.

Avantageusement, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'un récipient de cuisson munie des éléments ferromagnétiques selon un mode particulier de réalisation de l'invention.
- La figure 2 illustre une vue en perspective du dessous d'un secteur de la calotte du récipient de cuisson de la figure 1 suivant les lignes II-II, le fond comportant des éléments ferromagnétiques formés par des billes.
- La figure 3 illustre une vue de détail en coupe de la calotte de la figure 2 suivant la ligne III-III.
- La figure 4 illustre une vue en perspective du dessous d'un secteur de la calotte du récipient de cuisson de la figure 1, le fond comportant des éléments ferromagnétiques formés par des disques.
- La figure 5 illustre une vue de détail en coupe de la calotte de la figure 4 suivant la ligne V-V.

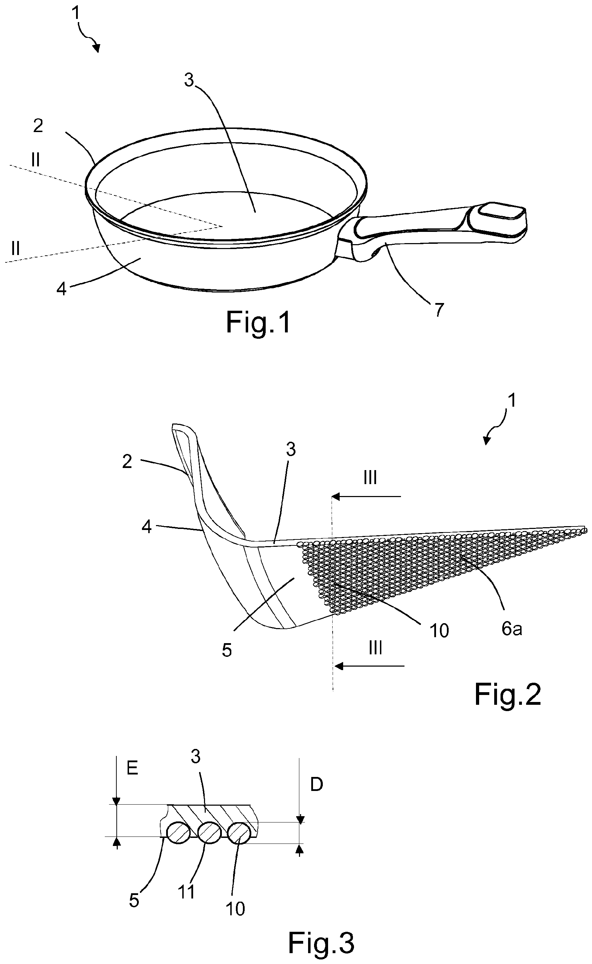

Tel que visible à la figure 1, un récipient de cuisson 1, constitué par une poêle, comporte une calotte 2 qui comprend un fond 3 et une paroi latérale 4. La calotte 2 est réalisée en un matériau amagnétique, notamment en aluminium par exemple, par une opération de frappe d'un disque ou par une opération de fonderie. Le récipient de cuisson 1 comporte une poignée 7 de préhension pour permettre sa manipulation.

Conformément aux figures 2 et 3, le fond 3 du récipient de cuisson 1 comprend une face externe 5 qui comporte des éléments ferromagnétiques 10. Les éléments ferromagnétiques 10 permettent au récipient de cuisson 1 de coopérer avec un appareil de chauffage par induction pour le faire chauffer. Les éléments ferromagnétiques prennent la forme de billes 10. Les billes 10 sont réalisées par exemple en acier inoxydable ferritique. Dans ce mode de réalisation, les billes 10 sont réparties sur une surface circulaire 6a centrée sur la face externe 5.

Le fond 3 présente une épaisseur E (Fig.3) par exemple égale à quatre millimètres. Par le fond présente une épaisseur E, on comprend que l'épaisseur est mesurée avant l'insertion des billes 10. Par exemple, si la calotte 2 est réalisée par frappe à partir d'un disque d'épaisseur quatre millimètres, l'épaisseur E correspondra à l'épaisseur du disque, soit quatre millimètres. Les billes 10 sont encastrées dans le fond par frappe à froid. Les billes 10 présentent un diamètre D inférieur à l'épaisseur E, de préférence inférieur à la moitié de l'épaisseur E. Dans le mode de réalisation illustré par les figures 2 et 3, les billes 10 ont un diamètre D de deux millimètres.

Les billes 10 peuvent être encastrées complétement dans le fond 3 pour que la face externe 5 soit plane. On peut cependant encastrer les billes 10 sur la majorité de leur diamètre respectif pour laisser une partie 11 apparente (Fig.3). Dans le mode de réalisation illustré par les figures 2 et 3, les billes 10 sont encastrées sur les trois quarts de leur diamètre D.

Les billes 10 pourront être pré-positionnées en regard du disque en aluminium à l'aide d'un pochoir magnétique, permettant ainsi de les maintenir en place lors de l'opération de frappe.

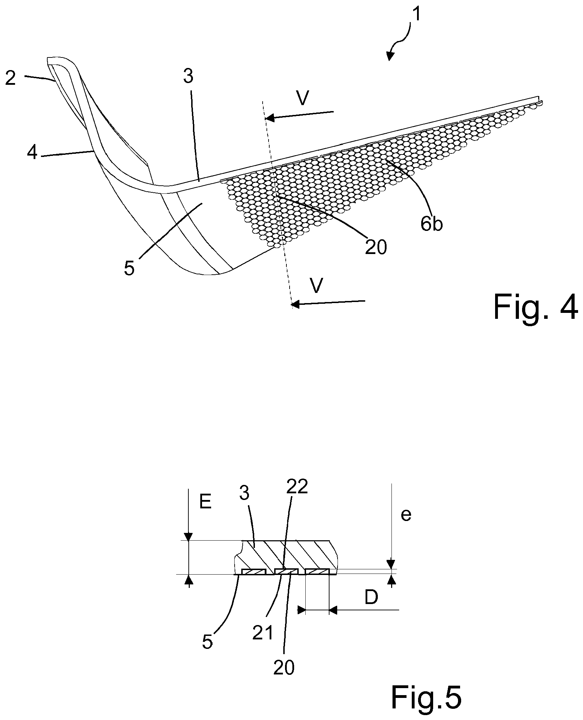

Conformément aux figures 4 et 5, le fond 3 du récipient de cuisson comprend une face externe 5 qui comporte des éléments ferromagnétiques 20. Dans ce mode de réalisation, les éléments ferromagnétiques prennent la forme de disques 20. Les disques 20 sont réalisés par exemple par découpe d'un feuillard en acier inoxydable ferritique. Les disques (20) comportent deux faces planes (21, 22) parallèles. Les disques 20 sont répartis sur une surface circulaire 6b centrée sur la face externe 5.

Le fond 3 présente une épaisseur E (Fig.5) par exemple égale à quatre millimètres. Les disques 20 sont encastrés dans le fond 3 par frappe à froid. Les disques 20 présentent un diamètre D égal à l'épaisseur E. Les disques 20 présentent une épaisseur e de 0,6 millimètre et sont encastrés complètement dans le fond 3. Ainsi, la face externe 5 est plane et uniquement la face 21 de chaque disque (20) est apparente (Fig. 5).

Bien entendu, l'invention n'est nullement limitée aux modes de réalisation décrits et illustrés qui n'ont été donnés qu'à titre d'exemples.

Ainsi, dans une variante de réalisation, les éléments ferromagnétiques présentent une forme cylindrique. Les éléments ferromagnétiques sont obtenus par exemple par découpe d'un fil.

## Revendications

1. Récipient de cuisson (1) comportant une calotte (2) comprenant un fond (3) destiné à coopérer avec un moyen de chauffage par induction, ledit fond (3) présentant une épaisseur E et comportant des éléments ferromagnétiques (10, 20), **caractérisé en ce que** les éléments ferromagnétiques (10, 20) sont indépendants les uns des autres et s'inscrivent chacun dans une sphère de diamètre inférieur ou égal à l'épaisseur E, les éléments ferromagnétiques (10, 20) assurant la compatibilité du récipient de cuisson (1) avec un appareil de chauffage par induction.

2. Récipient de cuisson (1) selon la revendication 1, **caractérisé en ce que** les éléments ferromagnétiques (20) comportent au moins une face plane (21).

3. Récipient de cuisson (1) selon l'une quelconque des revendications 1 à 2, **caractérisé en ce que** les éléments ferromagnétiques (20) comportent au moins deux faces planes (21, 22) parallèles.

4. Récipient de cuisson (1) selon la revendication 3, **caractérisé en ce que** les éléments ferromagnétiques sont des disques (20).

5. Récipient de cuisson (1) selon la revendication 4, **caractérisé en ce que** les disques (20) présentent un diamètre compris entre l'épaisseur E et les trois quarts de l'épaisseur E.

6. Récipient de cuisson (1) selon l'une quelconque des revendications 4 ou 5, **caractérisé en ce que** les disques (20) présentent une épaisseur comprise entre 0,4 et 0, 8 millimètre, de préférence 0,6 millimètre.

7. Récipient de cuisson (1) selon la revendication 1, **caractérisé en ce que** les éléments ferromagnétiques sont des billes (10).

8. Récipient de cuisson (1) selon la revendication 7, **caractérisé en ce que** les billes (10) présentent un diamètre inférieur à la moitié de l'épaisseur E

9. Récipient de cuisson (1) selon l'une quelconque des revendications 1 à 8, **caractérisé en ce que** les éléments ferromagnétiques (10, 20) sont rapportés sur une face externe (5) du fond (3)

10. Récipient de cuisson (1) selon la revendication 9, **caractérisé en ce que** les éléments ferromagnétiques (10, 20) sont encastrés partiellement dans le fond (3).

11. Récipient de cuisson (1) selon l'une quelconque des revendications 1 à 10, **caractérisé en ce que** le fond (3) comporte une collerette périphérique délimitant une zone d'implantation des éléments ferromagnétiques (10, 20).

12. Récipient de cuisson (1) selon l'une quelconque des revendications 1 à 11, **caractérisé en ce que** la répartition des éléments ferromagnétiques (10, 20) n'est pas homogène sur le fond (3).

13. Récipient de cuisson (1) selon l'une des revendications 1 à 12, **caractérisé en ce qu'**il est une poêle, une casserole, une sauteuse, un faitout ou un autocuiseur.

## Patentansprüche

1. Kochbehälter (1), der eine Schale (2) umfasst, die einen Boden (3) umfasst, der dazu bestimmt ist, mit einem Induktionsheizmittel zusammenzuwirken, wobei der Boden (3) eine Dicke E aufweist und ferromagnetische Elemente (10, 20) umfasst, **dadurch gekennzeichnet, dass** die ferromagnetischen Elemente (10, 20) voneinander unabhängig sind und jeweils eine Sphäre mit einem Durchmesser von kleiner oder gleich der Dicke E umschreiben, wobei die ferromagnetischen Elemente (10, 20) die Kompatibilität des Kochbehälters (1) mit einem Induktionsheizgerät gewährleisten.

2. Kochbehälter (1) nach Anspruch 1, **dadurch gekennzeichnet, dass** die ferromagnetischen Elemente (20) mindestens eine flache Seite (21) umfassen.

3. Kochbehälter (1) nach einem der Ansprüche 1 bis 2, **dadurch gekennzeichnet, dass** die ferromagnetischen Elemente (20) mindestens zwei parallele flache Seiten (21, 22) umfassen.

4. Kochbehälter (1) nach Anspruch 3, **dadurch gekennzeichnet, dass** es sich bei den ferromagnetischen Elementen um Scheiben (20) handelt.

5. Kochbehälter (1) nach Anspruch 4, **dadurch gekennzeichnet, dass** die Scheiben (20) einen Durchmesser im Bereich zwischen der Dicke E und drei Viertel der Dicke E aufweisen.

6. Kochbehälter (1) nach einem der Ansprüche 4 oder 5, **dadurch gekennzeichnet, dass** die Scheiben (20) eine Dicke im Bereich zwischen 0,4 und 0,8 Millimeter, vorzugsweise 0,6 Millimeter, aufweisen.

7. Kochbehälter (1) nach Anspruch 1, **dadurch gekennzeichnet, dass** es sich bei den ferromagnetischen Elementen um Kugeln (10) handelt.

8. Kochbehälter (1) nach Anspruch 7, **dadurch gekennzeichnet, dass** die Kugeln (10) einen Durchmesser von weniger als der Hälfte der Dicke E aufweisen.

9. Kochbehälter (1) nach einem der Ansprüche 1 bis 8, **dadurch gekennzeichnet, dass** die ferromagnetischen Elemente (10, 20) auf einer Außenseite (5) des Bodens (3) angebracht sind.

10. Kochbehälter (1) nach Anspruch 9, **dadurch gekennzeichnet, dass** die ferromagnetischen Elemente (10, 20) teilweise in den Boden (3) eingelassen sind.

11. Kochbehälter (1) nach einem der Ansprüche 1 bis 10, **dadurch gekennzeichnet, dass** der Boden (3) einen umlaufenden Kragen umfasst, der eine Zone für die Einbettung der ferromagnetischen Elemente (10, 20) begrenzt.

12. Kochbehälter (1) nach einem der Ansprüche 1 bis 11, **dadurch gekennzeichnet, dass** die Verteilung der ferromagnetischen Elemente (10, 20) am Boden (3) nicht homogen ist.

13. Kochbehälter (1) nach einem der Ansprüche 1 bis 12, **dadurch gekennzeichnet, dass** es sich bei ihm um eine Pfanne, einen Stieltopf, eine Schmorpfanne, einen Kochtopf oder einen Schnellkochtopf handelt.

## Claims

1. Cooking vessel (1) having a bowl (2) comprising a bottom (3) intended to engage with an induction heating means, said bottom (3) having a thickness E and having ferromagnetic elements (10, 20), **characterised in that** the ferromagnetic elements (10, 20) are independent from one another and each fall into a diameter sphere less than or equal to the thickness E, the ferromagnetic elements (10, 20) ensuring the compatibility of the cooking vessel (1) with an induction heating apparatus.

2. Cooking vessel (1) according to claim 1, **characterised in that** the ferromagnetic elements (20) have at least one flat face (21).

3. Cooking vessel (1) according to any one of claims 1 to 2, **characterised in that** the ferromagnetic elements (20) have at least two parallel flat faces (21, 22).

4. Cooking vessel (1) according to claim 3, **characterised in that** the ferromagnetic elements are disks (20).

5. Cooking vessel (1) according to claim 4, **characterised in that** the disks (20) have a diameter of between the thickness E and three-quarters of the thickness E.

6. Cooking vessel (1) according to any one of claims 4 or 5, **characterised in that** the disks (20) have a thickness of between 0.4 and 0.8 millimetres, preferably 0.6 millimetres.

7. Cooking vessel (1) according to claim 1, **characterised in that** the ferromagnetic elements are balls (10).

8. Cooking vessel (1) according to claim 7, **characterised in that** the balls (10) have a diameter less than half of the thickness E.

9. Cooking vessel (1) according to any one of claims 1 to 8, **characterised in that** the ferromagnetic elements (10, 20) are brought onto an outer face (5) of the bottom (3).

10. Cooking vessel (1) according to claim 9, **characterised in that** the ferromagnetic elements (10, 20) are partially recessed in the bottom (3).

11. Cooking vessel (1) according to any one of claims 1 to 10, **characterised in that** the bottom (3) comprises a peripheral collar delimiting an installation zone of the ferromagnetic elements (10, 20).

12. Cooking vessel (1) according to any one of claims 1 to 11, **characterised in that** the distribution of ferromagnetic elements (10, 20) is not homogeneous on the bottom (3).

13. Cooking vessel (1) according to one of claims 1 to 12, **characterised in that** it is a pan, a saucepan, a frying pan, a stewpot or a steamer.
